# EUROPÄISCHE PATENTSCHRIFT

(11) **EP 1 857 354 B1**
(45) Veröffentlichungstag und Bekanntmachung des Hinweises auf die Patenterteilung: **15.06.2011**
(21) Anmeldenummer: 07009195.4
(22) Anmeldetag: 08.05.2007
(51) Int. Cl.: B62J 6/04

(54) **Rücklicht für ein Zweirad**
Rear light for bicycle
Feu arrière de bicyclette

(30) Priorität: 19.05.2006 DE 102006023873
(43) Veröffentlichungstag der Anmeldung: 21.11.2007
(73) Patentinhaber: Busch & Müller KG, 58540 Meinerzhagen (DE)
(72) Erfinder: Müller, Guido, 58540 Meinerzhagen (DE)
(74) Vertreter: Heine, Christian Klaus

(56) Entgegenhaltungen:
- EP-A- 1 394 029
- EP-A1- 0 940 331
- EP-A1- 1 013 543
- DE-A1- 19 758 551
- DE-U1-202004 001 297

## Beschreibung

Die vorliegende Erfindung betrifft ein Rücklicht für ein Zweirad, und zwar vorzugsweise ein Rücklicht mit integrierten Rückstrahlern, insbesondere zur Befestigung am hinteren Ende eines Gepäckträgers.

Rücklichter, auch z.B. zur Befestigung am hinteren Ende eines Gepäckträgers, sind in großer Zahl bekannt und weisen im Allgemeinen eine bestimmte Rückstrahlfläche auf, wobei typischerweise eine Lichtquelle symmetrisch innerhalb oder nahe der Rückstrahlfläche angeordnet ist. Da solche Rücklichter mit integrierten Rückstrahlern zur Erfüllung gesetzlicher Vorschriften bestimme Abstrahlcharakteristiken aufweisen müssen, ist es auch bekannt, solche Rücklichter in einem Gehäuse mit einer Gehäuseabdeckung anzuordnen, wobei die Gehäuseabdeckung lichtbrechende und/oder reflektierende Bereiche aufweisen kann. Ein Beispiel für ein solches Rücklicht ist aus der EP 0 940 331 A1 zu entnehmen.

Moderne Leuchtdioden hoher Leistung bieten inzwischen die Möglichkeit, selbst bei Zweirädern so helle Rücklichter anzuwenden, dass neben der Erfüllung der gesetzlichen Vorschriften die Sicherheit noch durch weitere günstige Lichtabstrahleigenschaften erhöht werden kann.

Vor diesem Hintergrund ist es Aufgabe der vorliegenden Erfindung, ein robustes, stabiles Rücklicht für ein Zweirad zu schaffen, welches wartungsfrei und langlebig ist und eine hohe Sicherheit im Straßenverkehr bietet. Weitere Aufgabe ist es, ein besonders flaches Rücklicht ohne überstehende Teile und Anschlüsse zu schaffen.

Zur Lösung dieser Aufgabe dient ein Rücklicht gemäß dem Anspruch 1. Vorteilhafte Ausgestaltungen sind in den abhängigen Ansprüchen angegeben.

Das erfindungsgemäße Rücklicht für ein Zweirad umfasst mindestens eine Leuchtdiode, die über elektrische Anschlüsse mit einer Stromquelle verbindbar ist, und mindestens ein flächiges Rückstrahlelement. Die Leuchtdiode ist etwa in der Ebene des Rückstrahlelementes in einem Gehäuse gehaltert, welches eine transparente Gehäuseabdeckung aufweist, durch die der größte Teil des von der Lichtquelle erzeugten Lichtes in einer Hauptabstrahlrichtung hindurch treten kann. An der Gehäuseabdeckung ist gegenüber der Leuchtdiode ein Lichtverteiler angeformt, welcher so ausgebildet ist, dass durch Seitenreflektorflächen auf ihn auftreffendes Licht vor der Gehäuseabdeckung seitlich abgelenkt und zu seitlichen Bereichen der Gehäuseabdeckung geführt werden kann, welche so gestaltet sind, dass das Licht dort aus der Gehäuseabdeckung in einem seitlichen Winkelbereich wieder austreten kann. Die transparente Gehäuseabdeckung ist ansonsten im Wesentlichen mit glatten Oberflächen ausgestattet, kann jedoch auch zur Beeinflussung der Lichtverteilung eine Formgebung aufweisen, die eine gewisse Streuung und/oder Brechung herbeiführt, um eine gewünschte Abstrahlcharakteristik zu erreichen. In diesem Sinne erfüllt die transparente Gehäuseabdeckung die übliche Funktion. Das durch den Lichtverteiler zur Seite geführte Licht gelangt zu seitlichen Bereichen der Gehäuseabdeckung, die so gestaltet sind, dass das Licht dort in einem seitlichen Winkelbereich austreten kann. Im Betrieb führt das dazu, dass ein mit einem solchen Rücklicht ausgerüstetes Zweirad nicht nur von hinten gut erkennbar ist, sondern auch von den Seiten, was einen erheblichen Gewinn an Sicherheit bedeutet. Obwohl unter Umständen nur eine einzige Lichtquelle vorhanden ist, entstehen durch das erfindungsgemäße Rücklicht auf beiden Seiten relativ intensiv leuchtende Flächen, die gut erkennbar sind, sogar dann, wenn ein Gepäckstück auf dem Gepäckträger ein zentrales Licht teilweise abdecken würde.

Bevorzugt wird für die vorliegende Erfindung eine Leuchtdiode eingesetzt, die im wesentlichen rotes Licht abstrahlen kann, so dass die transparente Gehäuseabdeckung mindestens für rotes Licht transparent sein muss, vorzugsweise jedoch für den gesamten Bereich des sichtbaren Lichtes transparent sein kann. Auf diese Weise kann Kunststoff mit ähnlichen Eigenschaften wie Glas für die Gehäuseabdeckung eingesetzt werden. Als Lichtquelle kommen insbesondere Hochleistungsdioden, die rotes Licht abstrahlen, in Betracht. Bei dieser Kombination kann eine hohe Lichtausbeute bei geringem Stromverbrauch erreicht werden.

In einer typischen erfindungsgemäßen Ausführungsform ist die transparente Gehäuseabdeckung quer zur Hauptabstrahlrichtung relativ breit, beispielsweise mindestens 6 cm, vorzugsweise mindestens 8 cm, oder besonders bevorzugt sogar mindestens 10 cm. Damit wird in etwa die Größe für Rücklichter erreicht, die an der Rückseite eines Gepäckträgers befestigt werden.

In einer weiteren bevorzugten Ausführungsform der Erfindung ist die transparente Abdeckung nach hinten außen etwa quer zur Hauptabstrahlrichtung im wesentlichen eben und mit einem umlaufenden kragenartigen, zum Gehäuse hin gerichteten Rand ausgestattet, der die Gehäuseabdeckung am Gehäuse abstützt und einen freien Innenraum zwischen Gehäuse und Innenoberfläche der Abdeckung bewirkt. Es entsteht so ein gegen mechanische Einwirkungen unempfindliches Gehäuse ohne überstehende Teile. Der kragenartige Rand braucht nur gerade so hoch zu sein, dass alle Bauteile im Inneren des abgedeckten Gehäuses untergebracht werden können. Größere Abstände als beispielsweise 5 mm oder 3 mm sind jedenfalls aus lichttechnischen Gründen nicht erforderlich, so dass eine sehr flache Form möglich wird.

Besonders bevorzugt ist bei dem erfindungsgemäßen Rücklicht das mindestens eine Rückstrahlelement an dem Gehäuse mit Abstand zur Innenoberfläche der Gehäuseabdeckung angeordnet, vorzugsweise mit einem geringen Abstand, jedoch so, dass ein freier Weg für das zur Seite abgelenkte Licht vorhanden ist.

Durch den massiven Schutz von Gehäuse und Abdeckung können die eigentlichen Rückstrahlelemente relativ dünn und fein strukturiert sein.

Bevorzugt werden auf beiden Seiten der Lichtquelle Rückstrahlelemente angeordnet, insbesondere etwa kreisförmige Rückstrahlelemente, die aber auch durch Stege miteinander verbunden, also aus einem Stück gefertigt sein können. In Verbindung mit der Halterung und einer Elektronik der Leuchtdiode, die auch eine Standlichtschaltung umfassen kann, ergibt sich eine Form, die sich durch eine Abdeckung etwa nach Art einer Schutzbrille gut abdecken lässt. Die für eine solche Anordnung typische Einschnürung in der Mitte, die auch unabhängig von den anderen Merkmalen der Erfindung sehr vorteilhaft ist, erlaubt es, dort eine elektrische Platine mit elektrischen Anschlüssen in einem besonders geschützten Bereich anzuordnen, wodurch die ganze Anordnung zusätzlich an Robustheit gewinnt.

Schließlich ist es auch noch möglich, eine zusätzliche Sicherheit zu schaffen, indem an der Gehäuseabdeckung im Bereich der Hauptabstrahlrichtung Lichtumlenkmittel, insbesondere mindestens eine Reflektorfläche, vorgesehen werden, welche so ausgebildet sind, dass ein Teil des Lichtes so umgelenkt wird, dass es beim Betrieb des Rücklichtes an einem Zweirad von dessen Fahrer gesehen werden kann. Für den Fahrer ist es wichtig zu wissen, ob das Rücklicht funktioniert oder nicht. Die beschriebene zusätzliche Einrichtung ermöglicht es, durch einen einfachen Blick nach rückwärts festzustellen, ob dies der Fall ist. Auch diese Kontrollmöglichkeit erhöht die Sicherheit.

Ein bevorzugtes Ausführungsbeispiel der Erfindung, auf welches diese jedoch nicht beschränkt ist, wird im Folgenden in der Zeichnung beschrieben, und zwar zeigen:

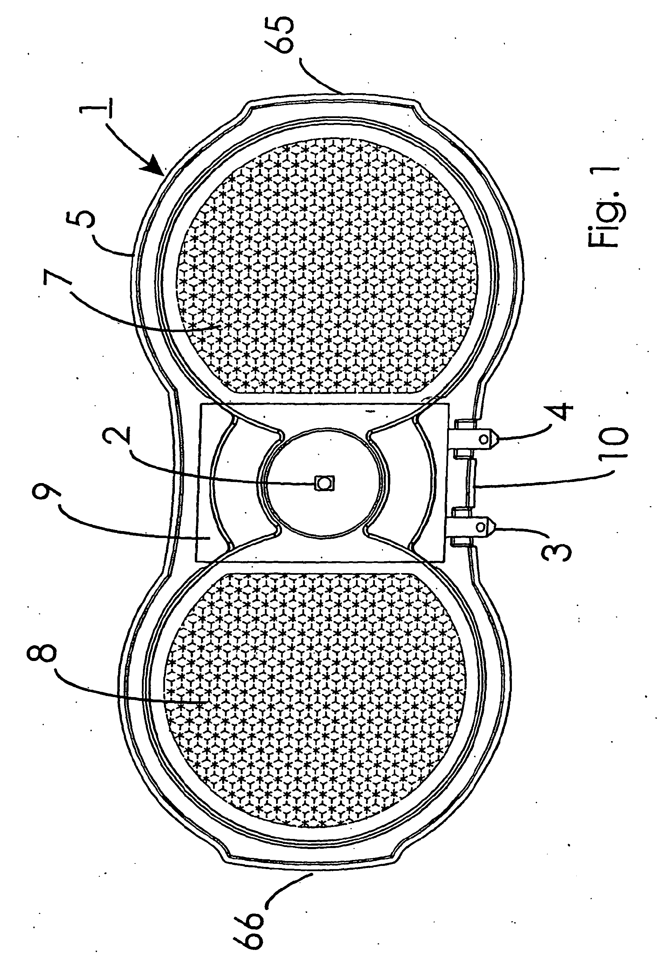

- Fig. 1:: eine Ansicht des erfindungsgemäßen Rücklichtes in Gegenrichtung zur Hauptabstrahlrichtung
- Fig. 2:: eine perspektivische schematische Ansicht der transparenten Gehäuseabdeckung mit Lichtverteiler und
- Fig. 3:: einen schematischen Schnitt durch das Rücklicht im Bereich der Leuchtdiode in einer beim Betrieb waagerechten Ebene.

Die Figuren zeigen ein Rücklicht 1 für ein Zweirad mit einer Leuchtdiode 2 als Lichtquelle, die Licht hauptsächlich in einen Bereich einer Hauptabstrahlrichtung H abstrahlen kann und die über einen ersten Anschluss 3 und einen zweiten Anschluss 4 elektrisch mit einer nicht dargestellten Stromquelle verbindbar ist. Die Leuchtdiode 2 ist an einem Gehäuse 5 befestigt, welches eine transparente Gehäuseabdeckung 6 aufweist, durch die der größte Teil des von der Leuchtdiode 2 erzeugten Lichtes hindurch treten kann. An die Gehäuseabdeckung 6 ist gegenüber der Leuchtdiode 2 mindestens ein Lichtverteiler 61 angeformt. Dieser weist schräge Seitenreflektorflächen 62, 63 auf, die zum einfallenden Licht einen solchen Winkel bilden, dass das Licht seitlich abgelenkt wird zu einem ersten seitlichen Bereich 65 bzw. einem zweiten seitlichen Bereich 66 der Gehäuseabdeckung 6. Das Licht ritt in diesen seitlichen Bereichen 65, 66 daher aus der Gehäuseabdeckung 6 aus und verteilt sich in einem seitlichen Winkelbereich W, der im Wesentlichen durch die Formgebung der seitlichen Bereiche 65, 66 bestimmt wird. Typischerweise kann ein Zweirad bei leuchtendem Rücklicht von hinten gut erkannt werden bzw. wird durch seine Rückstrahler auch dann erkennbar, wenn es von hinten angeleuchtet wird. Das erfindungsgemäße Rücklicht erhöht aktiv die seitliche Erkennbarkeit durch Abstrahlung eines Teils des Lichtes gerade in seitliche Bereiche. Dies war für Glühlampen als Lichtquellen eine Selbstverständlichkeit, ist jedoch für Leuchtdioden nur durch Zusatzmaßnahmen zu erreichen, wie sie die vorliegende Erfindung zur Verfügung stellt. So lassen sich auch für solche modernen Lichtquellen die gesetzlichen Vorschriften erfüllen oder sogar darüber hinaus noch zusätzliche Sicherheitsfaktoren schaffen, wie hier durch die Verlagerung der seitlichen Abstrahlbereiche nach außen. Das Rücklicht 1 hat typischerweise eine Ausdehnung A quer zur Hauptabstrahlrichtung H, also auch quer zur Fahrtrichtung, von mehr als 6 cm, vorzugsweise sogar mehr als 10 cm. Das bedeutet, dass die Bereiche 65, 66 zur seitlichen Abstrahlung etwas seitlich eines Gepäckträgerendes zu liegen kommen, was die Wahrscheinlichkeit der Abdeckung oder Abschattung durch ein transportiertes Gepäckstück verringert. An dem Gehäuse 5 sind im gezeigten Ausführungsbeispiel zwei über Stege miteinander verbundene, etwa kreisförmige Rückstrahlelemente 7, 8 angeordnet. Dabei liegt die Leuchtdiode 2 etwa im Zentrum der gesamten Fläche der Rückstrahlelemente 7, 8 und auch etwa in deren Ebene. Insbesondere steht die Leuchtdiode 2 überhaupt nicht oder nur 1 bis 2 mm über die Rückstrahlelemente 7, 8 vor. Bevorzugt handelt es sich um eine Leuchtdiode flacher Bauart, insbesondere ohne integrierten Reflektor und mit nur einer flachen Glas- oder Kunststoffabdeckung. Die Leuchtdiode 2 kann auf einer elektrischen Platine 9 montiert sein, die außerdem noch andere elektronische Bauteile, z. B. eine Standlichtschaltung trägt. Die Platine 9 weist elektrische Anschlüsse 3, 4 auf, die aus dem Gehäuse herausführen und an die von außen elektrische Leitungen angeschlossen werden können. Besonders vorteilhaft ist es, auch unabhängig von den anderen Einzelheiten der vorliegenden Erfindung, wenn die Platine eine etwas geringere Ausdehnung hat als der Durchmesser der Rückstrahlelemente 7, 8. Auf diese Weise kann die Platine 9 in einer Art Einschnürung 10 zwischen den Rückstrahlelementen 7, 8 angeordnet werden, so dass die Anschlüsse 3, 4 besonders geschützt liegen und nicht über die sonstigen maximalen Abmessungen des Rücklichtes 1 hinausragen.

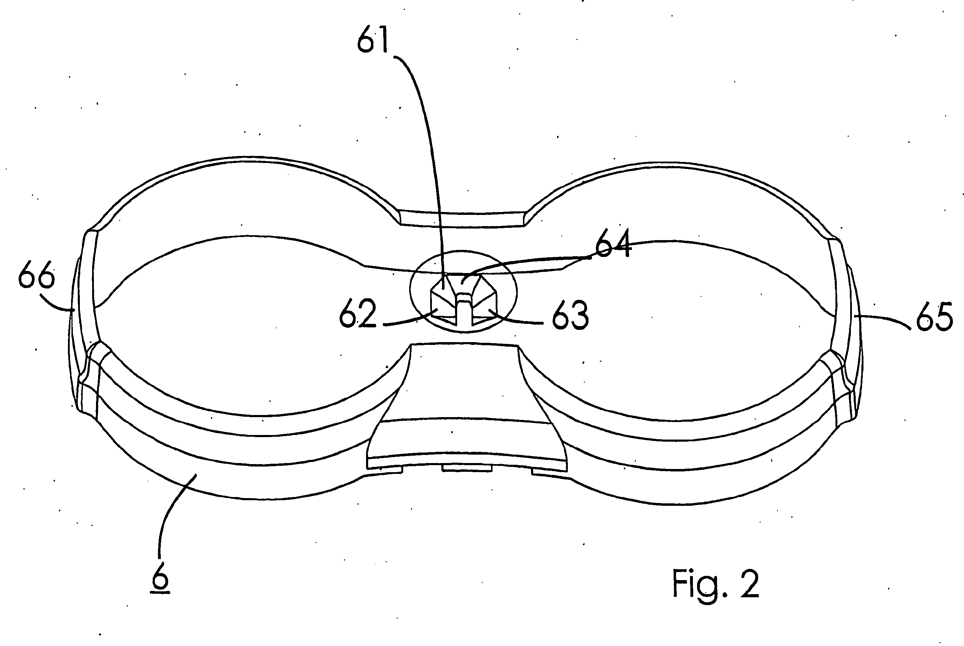

Fig. 2 zeigt beispielhaft in perspektivischer Darstellung, wie erfindungsgemäße Seitenreflektorflächen 62, 63 an der Gehäuseabdeckung 6 ausgebildet sein können. Die transparente Gehäuseabdeckung 6 weist hierzu mindestens einen prismatischen Lichtverteiler 61 auf, welcher eine erste Seitenreflektorfläche 62 und eine dazu etwa im rechten Winkel geneigte zweite Seitenreflektorfläche 63 aufweist. Das von der Leuchtdiode 2 auf den Lichtverteiler 61 auftreffende Licht gelangt zu dem ersten seitlichen Bereich 65 bzw. dem zweiten seitlichen Bereich 66 und tritt dort in einem Winkelbereich W wieder aus. Der Lichtverteiler 61 kann auch noch Lichtumlenkmittel 64 aufweisen, die einen kleinen Teil des Lichtes so umlenken, dass er noch oben vom austritt und vom Fahrer des Zweirades wahrgenommen werden kann. Solche Lichtumlenkmittel 64 können im einfachsten Fall mindestens eine Reflektorfläche aufweisen.

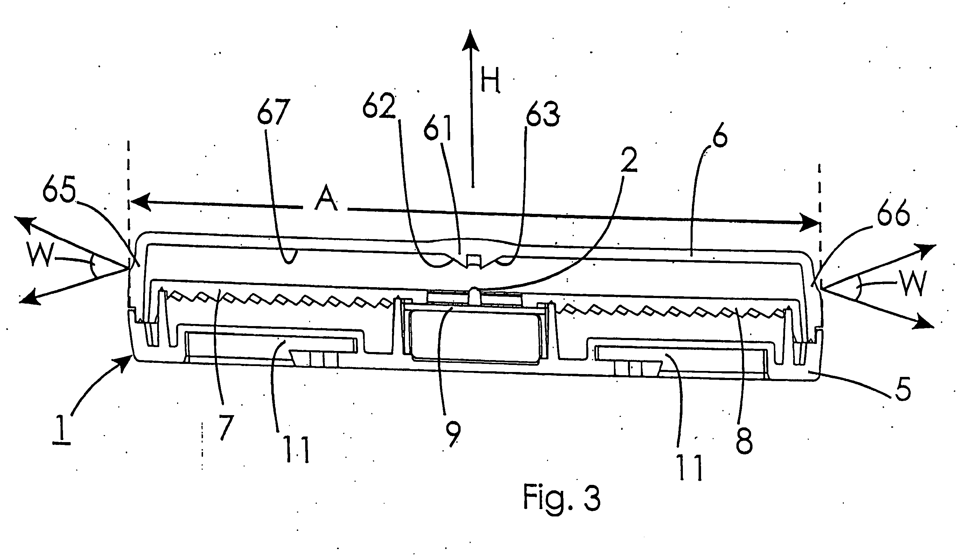

Fig. 3 zeigt einen schematischen Schnitt in einer beim Betrieb waagerechten Ebene durch das Rücklicht 1 im Bereich der Leuchtdiode 2. Man erkennt, dass das Licht in einem relativ großen Winkel um die Hauptabstrahlrichtung H abgestrahlt werden kann, obwohl die Leuchtdiode 2 in der Ebene der Rückstrahlelemente 7, 8 angeordnet ist. Durch den Lichtverteiler 61 kann trotzdem Licht zwischen Rückstrahlelementen 7, 8 und Gehäuseabdeckung 6 zu den seitlichen Bereichen 65, 66 der Gehäuseabdeckung 6 geleitet werden, so dass das Rücklicht die gewünschten Abstrahleigenschaften aufweist, obwohl es keinerlei Vorsprünge oder äußere Anbauten aufweist. Die Leuchtdiode 2 sitzt im Zentrum der gesamten Fläche der Rückstrahlelemente 7, 8 und die ganze Anordnung ist relativ flach und von glatten Flächen berandet. Halterungen für das Rücklicht 1 können in entsprechenden Aussparungen 11 angebracht werden.

Das erfindungsgemäße Rücklicht ist kostengünstig herstellbar, robust und betriebssicher und bietet eine hohe Sichtbarkeit beim Betrieb in verschiedenen Situationen und aus verschiedenen Richtungen.

### Bezugszeichenliste:

- 1: Rücklicht
- 2: Leuchtdiode
- 3: Erster Anschluss
- 4: Zweiter Anschluss
- 5: Gehäuse
- 6: Transparente Gehäuseabdeckung
- 61: Lichtverteiler
- 62: Erste Seitenreflektorfläche
- 63: Zweite Seitenreflektorfläche
- 64: Lichtumlenkmittel (Reflektorfläche)
- 65: Erster seitlicher Bereich
- 66: Zweiter seitlicher Bereich
- 67: Innenoberfläche der Gehäuseabdeckung
- 7: Erstes Rückstrahlelement
- 8: Zweites Rückstrahlelement
- 9: Elektrische Platine
- 10: Einschnürung
- 11: Aussparungen für Halterungen

- H: Hauptabstrahlrichtung
- W: seitlicher Winkelbereich
- A: Ausdehnung

## Patentansprüche

1. Rücklicht (1) für ein Zweirad, umfassend mindestens eine Leuchtdiode (2), die über Anschlüsse (3, 4) mit einer Stromquelle verbindbar ist, ein Gehäuse (5) zur Halterung der Leuchtdiode (2), mindestens ein flächiges Rückstrahlelement (7; 8) und eine transparente Gehäuseabdeckung (6) durch die der größte Teil des von der Leuchtdiode (2) erzeugten Lichtes in einer Hauptabstrahlrichtung (H) hindurch treten kann, wobei die Leuchtdiode (2) etwa in der Ebene des Rückstrahlelementes (7; 8) angeordnet ist und innen an die Gehäuseabdeckung (6) gegenüberliegend der Leuchtdiode (2) ein Lichtverteiler (61) angeformt ist, welcher so ausgebildet ist, dass durch Seitenreflektorflächen (62, 63) auf ihn auftreffendes Licht vor der Gehäuseabdeckung (6) seitlich abgelenkt und zu seitlichen Bereichen (65, 66) der Gehäuseabdeckung (6) geführt werden kann, welche so gestaltet sind, dass das Licht dort durch die Gehäuseabdeckung (6) in einem seitlichen Winkelbereich (W) austreten kann.

2. Rücklicht nach Anspruch 1, **dadurch gekennzeichnet, dass** die Leuchtdiode (2) im Wesentlichen rotes Licht abstrahlen kann und die transparente Gehäuseabdeckung (6) für rotes Licht, vorzugsweise für den gesamten Bereich des sichtbaren Lichtes transparent, also farblos transparent, ist.

3. Rücklicht nach Anspruch 1 oder 2, **dadurch gekennzeichnet, dass** die transparente Gehäuseabdeckung eine seitliche Ausdehnung (A) quer zur Hauptabstrahlrichtung (H) von mindestens 6 cm, vorzugsweise mindestens 8 cm, besonders bevorzugt mindestens 10 cm aufweist.

4. Rücklicht nach Anspruch 1, 2 oder 3, **dadurch gekennzeichnet, dass** die transparente Gehäuseabdeckung (6) außen etwa quer zur Hauptabstrahlrichtung im wesentlichen eben ist mit einem umlaufenden kragenartigen, zum Gehäuse (5) gerichteten Rand, der die Gehäuseabdeckung (6) am Gehäuse (5) abstützt und einen Abstand zwischen Gehäuse (5) und Innenoberfläche (67) der Gehäuseabdeckung (6) bewirkt.

5. Rücklicht nach Anspruch 4, **dadurch gekennzeichnet, dass** das Rücklicht (1) sehr flach ausgestaltet ist, insbesondere indem der Abstand der Innenoberfläche (67) der Gehäuseabdeckung (6) zu den Bauteilen im Gehäuse weniger als 5 mm, vorzugsweise weniger als 3 mm, beträgt.

6. Rücklicht nach einem der vorhergehenden Ansprüche, **dadurch gekennzeichnet, dass** das Rückstrahlelement (7; 8) an dem Gehäuse (5) mit Abstand zur Innenoberfläche (67) der Gehäuseabdeckung (6) angeordnet ist.

7. Rücklicht nach einem der vorhergehenden Ansprüche, **dadurch gekennzeichnet, dass** zwei auf beiden Seiten der Leuchtdiode (2) angeordnete Rückstrahlelemente (7, 8) vorhanden sind und die Gehäuseabdeckung (6) beide etwa nach Art einer Schutzbrille umgibt.

8. Rücklicht nach einem der vorhergehenden Ansprüche, **dadurch gekennzeichnet, dass** an der Gehäuseabdeckung (6) im Bereich der Hauptabstrahlrichtung (H) Lichtumlenkmittel (64), insbesondere mindestens eine Reflektorfläche, vorhanden sind, welche so ausgebildet sind, dass ein Teil des Lichtes so umgelenkt wird, dass es beim Betrieb des Rücklichtes (1) an einem Zweirad von dessen Fahrer gesehen werden kann.

9. Rücklicht nach einem der vorhergehenden Ansprüche, **dadurch gekennzeichnet, dass** die Leuchtdiode (2) einschließlich einer eventuellen integrierten Abdeckung maximal 2 mm, vorzugsweise weniger als 1 mm, insbesondere überhaupt nicht über das mindestens eine Rückstrahlelement (7; 8) hinausragt.

10. Rücklicht nach einem der vorhergehenden Ansprüche, **dadurch gekennzeichnet, dass** die Leuchtdiode (2) etwa zentral innerhalb der gesamten Fläche des bzw. der Rückstrahlelemente(s) (7; 8) angeordnet ist.

11. Rücklicht nach einem der vorhergehenden Ansprüche, **dadurch gekennzeichnet, dass** die Leuchtdiode (2) eine flache Bauart aufweist, insbesondere ohne Reflektor und ohne integrierte Frontlinse.

12. Rücklicht nach einem der vorhergehenden Ansprüche, **dadurch gekennzeichnet, dass** das zu den seitlichen Bereichen (65, 66) abgelenkte Licht zwischen dem bzw. den Rückstrahlelement(en) (7; 8) und der Gehäuseabdeckung (6) verläuft, obwohl die Leuchtdiode nicht oder nur wenig über die Ebene des bzw. der Rückstrahleelemente(s) (7; 8) hinausragt.

13. Rücklicht, insbesondere nach einem der vorhergehenden Ansprüche, **dadurch gekennzeichnet, dass** mindestens eine Leuchtdiode (2) auf einer elektrischen Platine (9) mit weiteren elektronischen Bauteilen angeordnet ist, wobei die Platine (9) in einer etwa mittig angeordneten Einschnürung (10) des Gehäuses angeordnet ist und von außen zugängliche Anschlüsse (3, 4) aufweist, die im Bereich der Einschnürung liegen, insbesondere nicht über die sonstigen Maximalmaße des Rücklichtes (1) hinausragen.

## Claims

1. Rear light (1) for a bicycle, comprising at least one light-emitting diode (2) which can be connected to a power source via connections (3, 4), a housing (5) for holding the light-emitting diode (2), at least one two-dimensional retroreflective element (7; 8), and a transparent housing cover (6) through which the major portion of the light generated by the light-emitting diode (2) can pass in a main direction of emission (H), the light-emitting diode (2) being arranged approximately in the plane of the retroreflective element (7; 8), and there being integrally formed inside on the housing cover (6) opposite the light-emitting diode (2) a light distributor (61) which is designed so that light impinging on it owing to lateral reflector surfaces (62, 63) can be deflected laterally upstream of the housing cover (6) and be guided to lateral regions (65, 66) of the housing cover (6) which are configured such that the light there can emerge through the housing cover (6) in a lateral angular range (W).

2. Rear light according to Claim 1, **characterized in that** the light-emitting diode (2) can substantially emit red light, and the transparent housing cover (6) is transparent to red light, preferably to the entire region of visible light, that is to say is colourlessly transparent.

3. Rear light according to Claim 1 or 2, **characterized in that** the transparent housing cover has a lateral extent (A) transverse to the main direction of emission (H) of at least 6 cm, preferably of at least 8 cm, with particular preference of at least 10 cm.

4. Rear light according to Claim 1, 2 or 3, **characterized in that** on the outside, and in a fashion approximately transverse to the main direction of emission, the transparent housing cover (6) is substantially level with a peripheral collar-like edge which is directed towards the housing (5), supports the housing cover (6) on the housing (5) and effects a space between housing (5) and inner surface (67) of the housing cover (6).

5. Rear light according to Claim 4, **characterized in that** the rear light (1) is of very flat design, in particular owing to the fact that the spacing of the inner surface (67) of the housing cover (6) from the components in the housing is less than 5 mm, preferably less than 3 mm.

6. Rear light according to one of the preceding claims, **characterized in that** the retroreflective element (7; 8) on the housing (5) is arranged at a spacing from the inner surface (67) of the housing cover (6).

7. Rear light according to one of the preceding claims, **characterized in that** two retroreflective elements (7, 8) arranged on both sides of the light-emitting diode (2) are present, and the housing cover (6) surrounds both of them rather in the manner of protective glasses.

8. Rear light according to one of the preceding claims, **characterized in that** present on the housing cover (6) in the region of the main direction of emission (H) are light deflecting means (64), in particular at least one reflector surface, which are designed so that a portion of the light is deflected so that it can be seen by the rider of the bicycle when the rear light (1) is operating thereon.

9. Rear light according to one of the preceding claims, **characterized in that**, including any possible integrated cover, the light-emitting diode (2) projects beyond the at least one retroreflective element (7; 8) by at most 2 mm, preferably by less than 1mm, in particular not at all.

10. Rear light according to one of the preceding claims, **characterized in that** the light-emitting diode (2) is arranged approximately centrally inside the entire surface of the retroreflective element(s) (7; 8).

11. Rear light according to one of the preceding claims, **characterized in that** the light-emitting diode (2) is of flat design, in particular without a reflector and without an integrated front lens.

12. Rear light according to one of the preceding claims, **characterized in that** the light deflected to the lateral regions (65, 66) runs between the retroreflective element(s) (7; 8) and the housing cover (6), although the light-emitting diode does not project beyond the plane of the retroreflective element(s) (7; 8), or does so only slightly.

13. Rear light, in particular according to one of the preceding claims, **characterized in that** at least one light-emitting diode (2) is arranged on a printed circuit board (9) with further electronic components, the printed circuit board (9) being arranged in a constriction (10) of the housing which is arranged in a roughly central fashion, and has connections (3, 4) which are accessible from outside and lie in the region of the constriction, in particular do not project beyond the otherwise maximum dimensions of the rear light (1).

## Revendications

1. Feu arrière (1) pour deux-roues, comprenant
au moins une diode luminescente (2) qui peut être reliée par des bandes de raccordement (3, 4) à une source de courant,
un boîtier (5) qui maintient la diode luminescente (2),
au moins un élément rétroréfléchissant (7; 8) plat et
un couvercle transparent (6) de boîtier par lequel la plus grande partie de la lumière produite par la diode luminescente (2) peut sortir dans une direction principale d'émission (H),
la diode luminescente (2) étant disposée sensiblement dans le plan de l'élément rétroréfléchissant (7; 8) et un répartiteur de lumière (61) étant formé à l'intérieur du couvercle (6) du boîtier face à la diode luminescente (2) et configuré de telle sorte que la lumière incidente sur lui soit déviée latéralement par des surfaces réfléchissantes latérales (62, 63) en avant du couvercle (6) du boîtier et puisse être amenée vers des parties latérales (65, 66) du couvercle (6) du boîtier qui sont configurées de telle sorte que la lumière puisse en cet emplacement sortir par le couvercle (6) du boîtier dans une plage angulaire latérale (W).

2. Feu arrière selon la revendication 1, **caractérisé en ce que** la diode luminescente (2) peut émettre essentiellement de la lumière rouge et **en ce que** le couvercle (6) du boîtier est transparent à la lumière rouge et de préférence transparent à toute la plage de la lumière visible, et donc transparent et incolore.

3. Feu arrière selon la revendication 1 ou 2, **caractérisé en ce que** le couvercle transparent du boîtier présente une extension latérale (A) dans la direction transversale par rapport à la direction principale d'émission (H) d'au moins 6 cm, de préférence d'au moins 8 cm et de façon particulièrement préférable d'au moins 10 cm.

4. Feu arrière selon la revendication 1, 2 ou 3, **caractérisé en ce que** l'extérieur du couvercle transparent (6) du boîtier est essentiellement plan dans la direction transversale à la direction principale d'émission et présente une bordure périphérique en forme de collet orientée vers le boîtier (5) qui appuie le couvercle (6) du boîtier sur le boîtier (5) et a pour effet de maintenir une distance entre le boîtier (5) et la surface intérieure (67) du couvercle (6) du boîtier.

5. Feu arrière selon la revendication 4, **caractérisé en ce que** le feu arrière (1) a une configuration très aplatie, en particulier par le fait que la distance entre la surface intérieure (67) du couvercle (6) du boîtier et les composants présents dans le boîtier est inférieure à 5 mm et de préférence inférieure à 3 mm.

6. Feu arrière selon l'une des revendications précédentes, **caractérisé en ce que** l'élément rétroémetteur (7; 8) est disposé sur le boîtier (5) à une distance de la surface intérieure (67) du couvercle (6) du boîtier.

7. Feu arrière selon l'une des revendications précédentes, **caractérisé en ce que** des éléments rétroémetteurs (7, 8) sont prévus sur les deux côtés de la diode luminescente (2) et **en ce que** le couvercle (6) du boîtier les entoure tous deux à la manière de lunettes de protection.

8. Feu arrière selon l'une des revendications précédentes, **caractérisé en ce que** des moyens (64) de déviation de la lumière et en particulier au moins une surface réfléchissante sont prévus sur le couvercle (6) du boîtier dans la zone de la direction principale d'émission (H) et sont configurés de manière à dévier une partie de la lumière de telle sorte que lorsque le feu arrière (1) est en service sur un deux-roues, elle puisse être vue par son conducteur.

9. Feu arrière selon l'une des revendications précédentes, **caractérisé en ce que** la diode luminescente (2) y compris un couvercle qui y est éventuellement intégré ne déborde que d'au plus 2 mm, de préférence de moins de 1 mm et en particulier pas au-dessus du ou des éléments rétroémetteurs (7; 8).

10. Feu arrière selon l'une des revendications précédentes, **caractérisé en ce que** la diode luminescente (2) est disposée sensiblement au centre de la totalité de la surface du ou des éléments rétroémetteurs (7; 8).

11. Feu arrière selon l'une des revendications précédentes, **caractérisé en ce que** la diode luminescente (2) a une structure plate, en particulier sans réflecteur et sans lentille frontale intégrée.

12. Feu arrière selon l'une des revendications précédentes, **caractérisé en ce que** la lumière déviée par les parties latérales (65, 66) passe entre le ou les éléments rétroémetteurs (7; 8) et le couvercle (6) du boîtier bien que la diode luminescente ne déborde pas ou ne déborde que peu au-delà du plan du ou des éléments rétroémetteurs (7; 8).

13. Feu arrière, en particulier selon l'une des revendications précédentes, **caractérisé en ce qu'**au moins une diode luminescente (2) est disposée sur une carte (9) de circuit électrique qui présente d'autres composants électroniques, la carte (9) étant disposée dans un creux (10) disposé sensiblement au centre du boîtier et présentant des bornes de raccordement (3, 4) accessibles de l'extérieur et situées au niveau du creux, en particulier sans déborder au-delà des autres dimensions maximales du feu arrière (1).
